Europäisches Patentamt

European Patent Office

Office européen des brevets

(11) Veröffentlichungsnummer: **0 031 541**
A2

## EUROPÄISCHE PATENTANMELDUNG

(21) Anmeldenummer: 80107945.0

(22) Anmeldetag: 16.12.80

(51) Int. Cl.³: **G 21 C 7/16**

(30) Priorität: 28.12.79 SE 7910714

(43) Veröffentlichungstag der Anmeldung: 08.07.81
Patentblatt 81/27

(84) Benannte Vertragsstaaten: DE FR GB IT

(71) Anmelder: AB ASEA ATOM, S-721 83 Västeras (SE)

(72) Erfinder: Hannerz, Käre, Techn.Lit., Räby Rytterne,
S-725 92 Västeräs (SE)
Erfinder: Holm, Torbjörn, Dipl.-Ing.,
Karl-Hovbergsgatan 11B, S-633 53 Eskilstuna (SE)

(74) Vertreter: Boecker, Joachim, Dr.-Ing.,
Rathenauplatz 2-8, D-6000 Frankfurt a.M. 1 (DE)

(54) Kernreaktor des Siedewassertyps.

(57) Ein Kernreaktor des Siedewassertyps ist mit einem Steuersystem für Steuerstäbe (8) ausgerüstet, welches beim Auftreten eines Fehlers eine automatische Abschaltung des Reaktors ermöglicht, wobei es völlig unabhängig von einer von ausserhalb des Reaktors kommenden Energieversorgung arbeitet. Die Steuerstäbe (8) sind frei beweglich in Kanälen angeordnet. Diese Kanäle sind unten an eine mit Wasser gefüllte Verteilerkammer angeschlossen und stehen an ihrem oberen Teil durch Öffnungen mit dem umgebenden Reaktorraum in Verbindung. Der Reaktor ist mit einer Pumpe versehen, die in der Verteilerkammer einen Überdruck gegenüber dem umgebenden Raum erzeugt. Durch diesen Überdruck wird eine Haltekraft geschaffen, die imstande ist, den Steuerstab (8) in einer Lage ausserhalb des Reaktorkerns zu halten. Die Steuerstabkanäle stehen über Steuerleitungen mit Betätigungsvorrichtungen in Verbindung, durch die Impulse zur Änderung der Steuerstablage erzeugt werden können.

Patentanwalt und Rechtsanwalt
Dr.-Ing. Dipl.-Ing. Joachim B o e c k e r

0031541

6 Frankfurt / Main 1, 9.12.1980
Rathenauplatz 2 - 8      B/th 20 886 P
Telefon: (06 11) ' 28 23 55
Telex: 4 189 066 itax d

Aktiebolaget ASEA-ATOM, Västeras/Schweden

## Kernreaktor des Siedewassertyps

Die Erfindung betrifft einen Kernreaktor des Siedewassertyps gemäß dem Oberbegriff des Anspruches 1.

Im Reaktorkern solcher Kernreaktoren befindet sich eine große Anzahl von vertikalen, rohrförmigen Kanälen für Steuerstäbe. Diese Kanäle haben eine Länge, die ungefähr das Zweifache der Höhe des eigentlichen Reaktorkerns beträgt. Die untere Hälfte dieser Kanäle liegt im Reaktorkern, während die obere Hälfte in einem Raum über dem Reaktorkern liegt. Jeder Steuerstab hat nur zwei mögliche stabile Lagen, eine untere (End)lage, in der sich der Steuerstab im Kern befindet und somit einen leistungsvermindernden Neutronenabsorbator darstellt, und eine obere (End)lage, in der sich der Steuerstab völlig außerhalb des Kerns befindet und somit den Neutronenfluß im Kern nicht beeinflußt. Die gewünschte Regelmöglichkeit erhält man dadurch, daß eine sehr große Anzahl von Steuerstäben verwendet wird. In einem zur Erzeugung elektrischer Energie verwendeten Reaktor normaler Größe von ca. 1000 MW liegt die Steuerstabzahl zweckmäßig über 500, vorzugsweise über 1000. Beispielsweise können 1800 Steuerstäbe in einem Gittermuster zwischen den Brennelementkästen der Brennstäbe angeordnet sein. Die Steuerstäbe werden auf hydraulischem Wege aus ihrer unteren Lage im Reaktorkern in ihre obere Lage außerhalb des Reaktorkerns bewegt und durch den Einfluß einer hydraulischen Kraft in ihrer oberen, aus dem Kern herausgefahrenen Lage gehalten.

Der Erfindung liegt die Aufgabe zugrunde, einen Kernreaktor der eingangs genannten Art zu entwickeln, bei dem die Steueranordnung für die Steuerstäbe derart beschaffen ist, daß beim Auftreten eines Fehlers im Reaktor der Reaktor automatisch abgestellt wird, ohne daß hierzu Kraftsysteme erforderlich sind, die von außerhalb des Reaktors liegenden Energiequellen abhängig sind.

Zur Lösung dieser Aufgabe wird ein Kernreaktor nach dem Oberbegriff des Anspruches 1 vorgeschlagen, der erfindungsgemäß die im kennzeichnenden Teil des Anspruches 1 genannten Merkmale hat.

Vorteilhafte Weiterbildungen der Erfindung sind in den Unteransprüchen genannt.

Die Haltekraft für die aus dem Kern herausgefahrenen Steuerstäbe kommt durch eine Druckdifferenz zwischen einer Kammer im unteren Teil der Steuerstabkanäle, an welche Kammer die Steuerstabkanäle angeschlossen sind, und den Druck im Reaktorbehälter im oberen Teil der Steuerstabkanäle zustande. Bei einem Fortfall dieser Druckdifferenz und somit einem Fortfall der Haltekraft fallen sämtliche Steuerstäbe, die sich in ihrer oberen Lage befinden, unter dem Einfluß der Schwerkraft herunter, so daß man eine Notstillsetzung des Reaktors erhält. Dieser Fortfall der Druckdifferenz und der Haltekraft kann durch ein gewolltes Abstellen oder durch Überwachungsgeräte bewirkt werden, die beim Auftreten eines Fehlers in Tätigkeit treten. Das System zur Schaffung der Druckdifferenz und der Haltekraft ist so ausgebildet, daß jedes Absinken des Wasserniveaus im Reaktorbehälter unter einen aus Sicherheits-

/3

gründen unzulässigen Wert ein Aufrechterhalten der Druckdifferenz unmöglich macht. Eine automatische Abschaltung des Reaktors erfolgt dann immer bei einem unzulässigen Ausfall der Speisewasserzufuhr, ohne daß irgendwelche Maßnahmen seitens des Bedienungspersonals erforderlich sind. Wird mit einer großen Wassermenge über dem Reaktorkern gearbeitet, so erhält man automatisch eine hohe Sicherheit gegenüber einem Trockenkochen und Schäden an Brennelementen sowie eine sehr große Sicherheit gegen ein Kernschmelzen.

Bei dem Kernreaktor gemäß der Erfindung bewirkt der Ausfall der Antriebskraft für ein Antriebssystem, welches die Steuerstäbe in der Lage außerhalb des Kerns hält, eine schwerkraftbedingte automatische Einführung der Steuerstäbe in den Kern. Die Antriebskraft des Haltesystems und damit die Fähigkeit des Systems, die Steuerstäbe in herausgehobener Lage festzuhalten, kann bei Fehlern, wie einem Notstopp einer Turbine, einem Rohrbruch, einem Ausfall der Speisewasserzufuhr, schnellen Druckveränderungen usw., durch Regelsysteme aufgehoben werden, die von einer Energieversorgung durch außerhalb des Reaktors liegende Hilfssysteme vollkommen unabhängig sind. Hierdurch kann der Reaktor bei Fehlern, die Sicherheitsrisiken für den Reaktor darstellen können, selbstabschaltend gemacht werden.

Anhand der in den Figuren gezeigten Ausführungsbeispiele soll die Erfindung näher erläutert werden. Es zeigen

Fig. 1a und 1b in Form schematischer Skizzen einen Schnitt durch einen Reaktor gemäß der Erfindung,

Fig. 2 ein zu dem Sicherheitssystem des Reaktors gehörendes Ventil,

Fig. 3 einen vertikalen Schnitt durch einen Reaktor gemäß der Erfindung,

9.12.1980
20 886 PE

0031541

Fig. 4 bis 6   vertikale Schnitte in verschiedenen
Höhen durch eine Brennstoffmoduleinheit, die
aus mehreren Brennelementkästen und Steuerrohren mit Steuerstäben besteht,

Fig. 7 bis 9   horizontale Schnitte durch die Brennstoffmoduleinheit,

Fig. 10 zwei Steuerstabeinheiten mit Steuerstäben,
wobei der Steuerstab sich in einem Falle in
seiner oberen und im anderen Falle in seiner
unteren Lage befindet,

Fig. 11 und 12   den unteren bzw. oberen Teil einer
Steuerstabeinheit, wenn sich der Steuerstab
in seiner unteren Lage im Steuerstabkanal und
somit im Reaktorkern befindet,

Fig. 13 und 14   den unteren bzw. oberen Teil einer
Steuerstabeinheit, wenn sich der Steuerstab
in seiner oberen Lage im Steuerstabkanal befindet und somit aus dem Reaktorkern herausgefahren ist,

Fig. 15 und 16   Schnitte durch einen Steuerstab,

Fig. 17 den unteren Teil des Reaktorkerns und das
Kerngitter, das die Brennstoffmoduln trägt,
den Anschluß der Steuerstabkanäle an einen Verteilerkasten für einen Haltewasserfluß und den
Anschluß an Betätigungsleitungen für Betätigungsdruckmittel zur Änderung der Lage der
Steuerstäbe.

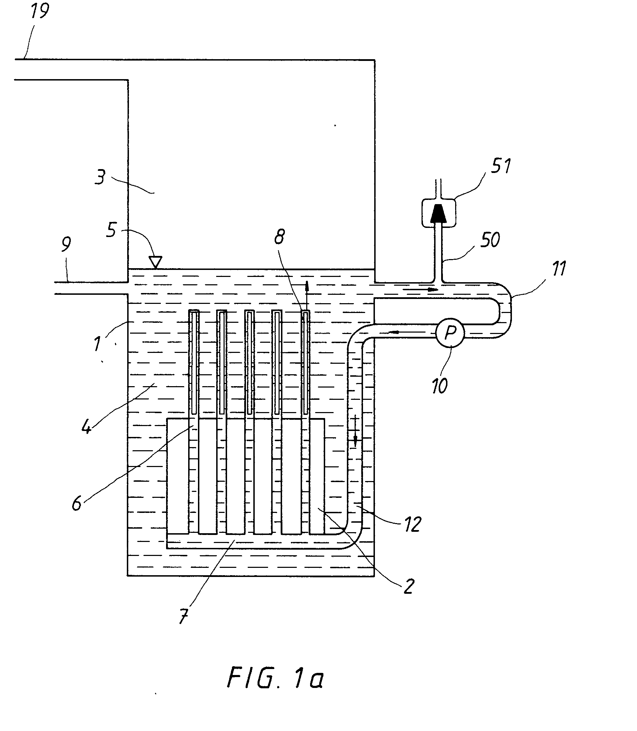

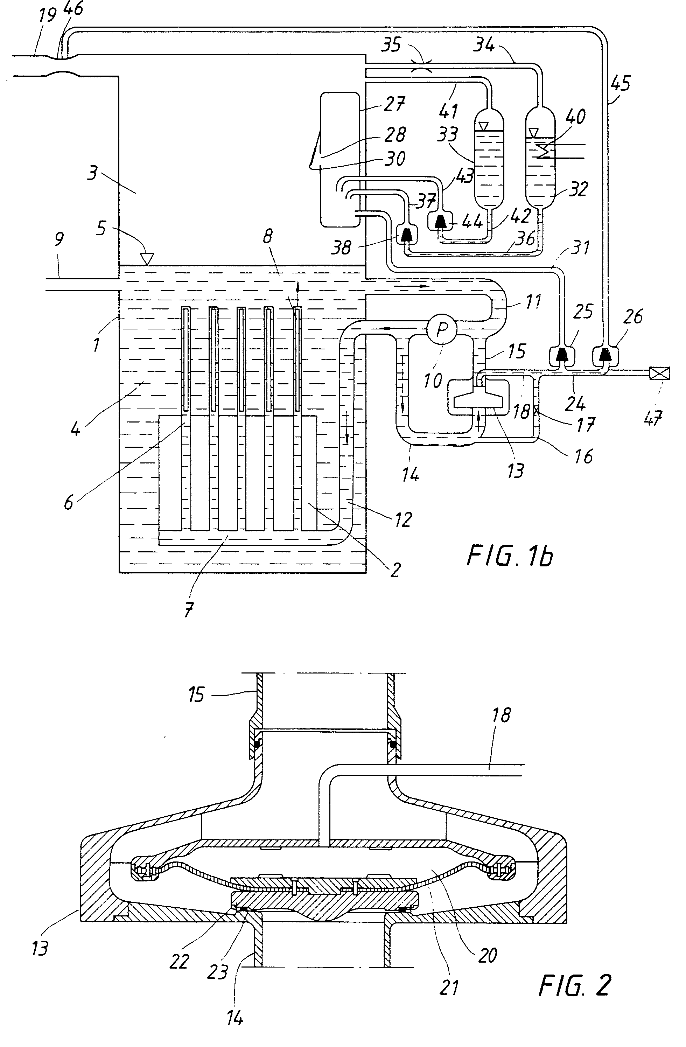

In den Figuren 1a und 1b bezeichnet 1 einen Reaktorbehälter mit einem Reaktorkern 2, der im unteren Teil des Reaktorbehälters 1 angeordnet ist. Im oberen Teil des Behälters 1 befindet sich ein dampfgefüllter Raum 3. Der
untere Raum 4 des Reaktorbehälters 1 ist mit Wasser gefüllt. Das Normalniveau des Wassers ist mit 5 bezeichnet.
Der Reaktor enthält Steuerstabkanäle 6, deren Länge ungefähr doppelt so groß ist wie die Höhe des Kerns 2. Unter dem Kern 2 befindet sich ein Verteilerkasten 7, in welchem ein höherer Wasserdruck herrscht als im Raum 4. Die Steuerkanäle 6 sind mit ihren unteren Enden an dem Verteilerkasten 7 angeschlossen. In dieser Lage bewirken die Stäbe 8 eine Drosselung einer in dieser Figur nicht gezeigten Öffnung am oberen Ende des Kanals. Dies hat zur Folge, daß der Druck am unteren Ende des Steuerstabs 8 nahezu mit dem Druck im Verteilerkasten 7 übereinstimmt, während der am oberen Ende des Steuerstabs 8 nach unten gerichtete Druck mit dem Druck im Raum 4 übereinstimmt. Diese Druckdifferenz bewirkt eine auf den Stab 8 wirkende Kraft, welche den Stab in der gezeigten Lage hält. Wenn der relative Überdruck im Verteilerkasten 7 gegenüber dem Wasservolumen 4 verschwindet, dann verschwindet auch die eben genannte Haltekraft für die Steuerstäbe 8, so daß diese infolge der Schwerkraft in den Reaktorkern 2 sinken, wodurch der Reaktor abgestellt wird. Dem Reaktorbehälter 1 wird Speisewasser über die Leitung 9 zugeführt. Der Reaktorbehälter steht über die Dampfleitung 19 mit einer nicht gezeigten Dampfturbine in Verbindung.

Der Überdruck im Verteilerkasten (Druckkasten) 7 sowie der Haltefluß werden mit Hilfe einer Pumpe 10 erzeugt, die auf ihrer Saugseite über die Saugleitung 11 mit dem wassergefüllten Reaktorraum 4 und auf ihrer Druckseite über die Druckleitung 12 mit dem Verteilerkasten 7 unter dem Reaktorkern 2 verbunden ist.

In der Ausführung nach Fig. 1a ist ein Sicherheitsventil 51 über eine Leitung 50 an die Saugleitung 11 der Pumpe 10 angeschlossen. In der Ausführung nach Fig. 1b ist ein Kurzschlußkreis an den Pumpkreis angeschlossen. Dieser enthält ein Membranventil 13, das an die Druckleitung 12 des Pumpkreises über eine Leitung 14 und an die Saugleitung 11 des Pumpkreises über eine Leitung 15 angeschlossen ist. Wenn das Ventil 13 öffnet, wird der Pumpkreis kurzgeschlossen und der Überdruck im Verteilerkasten 7 verschwindet, so daß die Steuerstäbe 8 herunterfallen, wobei eine Notstillsetzung des Reaktors stattfindet. Eine Leitung 16 mit einer Drosselstelle 17 ist zwischen die Leitung 14 des Kurzschlußkreises und eine Leitung 18 geschaltet, die an einen Raum 20 über einer Membran 21 im Ventil 13 angeschlossen ist (siehe Fig.2). Diese Membran wirkt auf einen Ventilteller 22 in schliessender Richtung zum Ventilsitz 23 des Ventils 13. Die Leitung 16 ist über die Leitung 24 an zwei Differentialdruckventile 25 und 26 angeschlossen, die als gewichtsbelastete Ventile dargestellt sind. Bei normalem Betrieb sind die Ventile 25 und 26 geschlossen, und der Druck in der Leitung 14 und im Ventilraum 20 ist gleich groß, da der Raum 20 über die Leitungen 16 und 18 mit der Leitung 14 in Verbindung steht. Das Ventil ist dann geschlossen.

Im Reaktorbehälter 1 befindet sich ein Behälter 27, dessen Inneres über eine Öffnung 28 normalerweise mit dem Dampfraum 3 in Verbindung steht. An der Öffnung befindet sich ein Klappenventil 30, das so angeordnet ist, daß es bei den normalen betrieblichen Druckveränderungen im Reaktorbehälter 1 geöffnet ist. Bei einem schnellen - großen - Druckanstieg jedoch wird die Öffnung 28 von dem Einströmen des Dampfes beeinflußt und geschlossen. Der Behälter 27 ist über die Leitung 31 mit dem Ventil 25 verbunden. Außerhalb des Reaktorbehälters 1 befinden sich zwei Behälter 32 und 33, die Wasser enthalten. Der Behälter 32 ist über die Leitung 34, in der sich eine Drosselstelle 35 befindet, mit dem Dampfraum 3 verbunden. Über die Leitung 36, das Druckdifferenzventil 38 und die Leitung 37 ist der Behälter 32 mit dem Behälter 27 verbunden. Das Wasser im oberen Teil des Behälters wird mit Hilfe einer Heizspirale 40 bis nahe auf den Siedepunkt erhitzt. Im unteren Teil des Behälters soll das Wasser kalt sein. Der Behälter 33 ist über die Leitung 41 mit dem Dampfraum 3 und über die Leitungen 42 und 43, zwischen denen das Druckdifferenzventil 44 liegt, mit dem Behälter 27 verbunden. Das Wasser im unteren Teil des Behälters soll kalt sein. Das Ventil 26 ist über die Leitung 45 an ein Venturirohr 46 in der abgehenden Dampfleitung 19 angeschlossen. Die Leitung 24 kann an ein Ablaufventil 47 angeschlossen sein, das durch ein manuelles oder automatisches Betätigungssignal betätigt werden kann.

Gemäß der Erfindung kann der Reaktor bei Betriebsstörungen völlig unabhängig von hilfskraftabhängigen Antriebssystemen durch das Einführen von Steuerstäben in den Reaktorkern 2 auf folgende Weise stillgesetzt werden. Folgende Störungsfälle werden betrachtet:

1. Die Turbine wird schnellgestoppt. Die Pumpe 10 wird abgestellt. Die Druckdifferenz zwischen dem Verteilerkasten 7 und dem umgebenden mit Wasser gefüllten Raum 4 verschwindet und damit auch die Haltekraft. Die Steuerstäbe 8 fallen in den Reaktorkern hinunter.

2. Die Speisewasserzufuhr hört auf. Das Wasserniveau 5 sinkt. Wenn das Niveau soweit gesunken ist, daß Dampf in die Saugleitung der Pumpe gelangt, verschwindet das Druckhaltevermögen der Pumpe 10 und damit die Haltekraft, die hochgeschobene Steuerstäbe 8 in dieser Lage hält. Die Steuerstäbe 8 fallen in den Reaktorkern hinunter.

3. Die Turbine wird gestoppt, die Pumpe 10 jedoch nicht. Der Druck im Reaktor steigt schnell an. Bei der Ausführung nach Fig. 1a öffnet das Sicherheitsventil 51 und der Druck in der Saugleitung 11 der Pumpe 10 sinkt. Das Druckhaltevermögen der Pumpe 10 hört auf und damit verschwindet die Haltekraft, welche die Steuerstäbe 8 in der oberen Lage hält. Die Steuerstäbe 8 fallen in den Reaktorkern hinunter. Bei der Ausführung nach Fig. 1b entsteht zwischen dem Dampfraum 3 und dem Inneren des Behälters 27 eine Druckdifferenz, so daß Dampf in den Behälter 27 einströmt. Bei einer hohen Strömungsgeschwindigkeit schließt die Öffnung (Ventil) 28. Gleichzeitig
steigt infolge des Einströmens von Dampf in die Leitung
41 der Druck im Behälter 33. Zwischen dem Behälter 27
und dem Ventil 25 entsteht eine Druckdifferenz, so daß
dieses Ventil öffnet. Der Druck in der Leitung 18 und
somit im Raum 20 im Ventil 13 sinkt, so daß das Ventil
13 öffnet und den Pumpenkreis kurzschließt, der die Haltekraft zum Festhalten der Steuerstäbe in der herausgeschobenen Lage erzeugt. Die Steuerstäbe fallen in den
Reaktorkern 2 hinunter und der Reaktor wird abgeschaltet.

Wenn der Druck im Behälter/33 steigt, tritt auch eine Druckdifferenz zwischen den Behältern 33 und 27 auf. Wenn die
Druckdifferenz so groß wird, daß das Ventil 44 öffnet,
so strömt kaltes Wasser vom Behälter 33 in den Behälter
27. Dort befindlicher Dampf wird kondensiert, so daß
der Druck im Behälter 27 sinkt. Die Druckdifferenz zwischen dem Dampfraum 3 und dem Behälter 27 wird größer,
so daß eine schnelle Drucksenkung in der Leitung 18 und
im Ventilraum 20 stattfindet. Es erfolgt ein schnelles
Öffnen des Ventils 13, so daß der Pumpenkreis sehr schnell
kurzgeschlossen wird. Die Steuerstäbe fallen in den Reaktorkern hinunter und der Reaktor wird abgeschaltet.

4. Die Dampfleitung 19 bricht.

Bei der Ausführung nach Figur 1b erhält man eine stark
ansteigende Strömungsgeschwindigkeit im Venturirohr 46.
Hierdurch erhält man eine Drucksenkung in der Leitung 45
und im Ventil 26, so daß dieses Ventil öffnet und eine
Drucksenkung in den Leitungen 24 und 18 verursacht, die
ihrerseits ein Öffnen des Ventils 13 und ein Kurzschliessen des Pumpenkreises bewirken. Ein Dampfleitungsbruch
führt auch zu einem schnellen Druckverlust im Reaktorbehälter. Diese Drucksenkung überträgt sich auf den Behälter 32, jedoch wird hier die Drucksenkung einerseits
durch die Drosselstelle 35 in der Leitung 34 und andererseits durch das Kochen des warmen Wassers im oberen Teil
des Behälters 32 begrenzt. Gleichzeitig sinkt der Druck
im Behälter 27 durch das Herausströmen von Dampf aus dem
Behälter 27 durch die Öffnung 28. Es tritt eine Druckdifferenz auf, die ein Öffnen des Ventils 38 und das Einströmen von kaltem Wasser in den Behälter 27 vom unteren
Teil des Behälters 32 bewirkt. Dieses Einströmen von Wasser verursacht das Kondensieren von Dampf im Behälter 27,
wodurch eine kurzzeitige Drucksenkung auftritt, so daß
man eine große Druckdifferenz zwischen dem Inneren des
Behälters 27 und dem Dampfraum 3 im Reaktor erhält. Die
Drucksenkung verursacht ein Schließen der Öffnung 28 durch
die Ventilklappe 30 und ein Öffnen des Ventils 25 und damit eine Senkung des Druckes in der Leitung 18 und im
Raum 20 im Ventil 13. Das Ventil 13 öffnet, so daß der
Pumpenkreis kurzgeschlossen wird und die Haltekraft für
die Steuerstäbe verschwindet. Die Steuerstäbe fallen folglich in den Reaktorkern hinunter und der Reaktor wird abgeschaltet. Bei dieser Fehlerart erhält man also eine
doppelte Sicherheit.

Wie aus dem Obigen hervorgeht, erhält man eine sichere
Abschaltung des Reaktors ohne Verwendung von Betätigungsvorrichtungen, deren Funktion von außerhalb des Reaktors
liegenden Energiequellen abhängig ist. Die gesamte vorstehend beschriebene Anordnung zur automatischen Stillsetzung des Reaktors kann in einem Raum untergebracht
werden, der bei normalem Reaktorbetrieb vollkommen unzugänglich ist, so daß die Anordnung weder vom Betriebspersonal beeinflußt, noch von Außenstehenden beschädigt werden kann, die sich unerlaubten Zugang zu der Reaktoranlage verschafft haben. Die Reaktoranlage wird dadurch
sehr sabotagesicher.

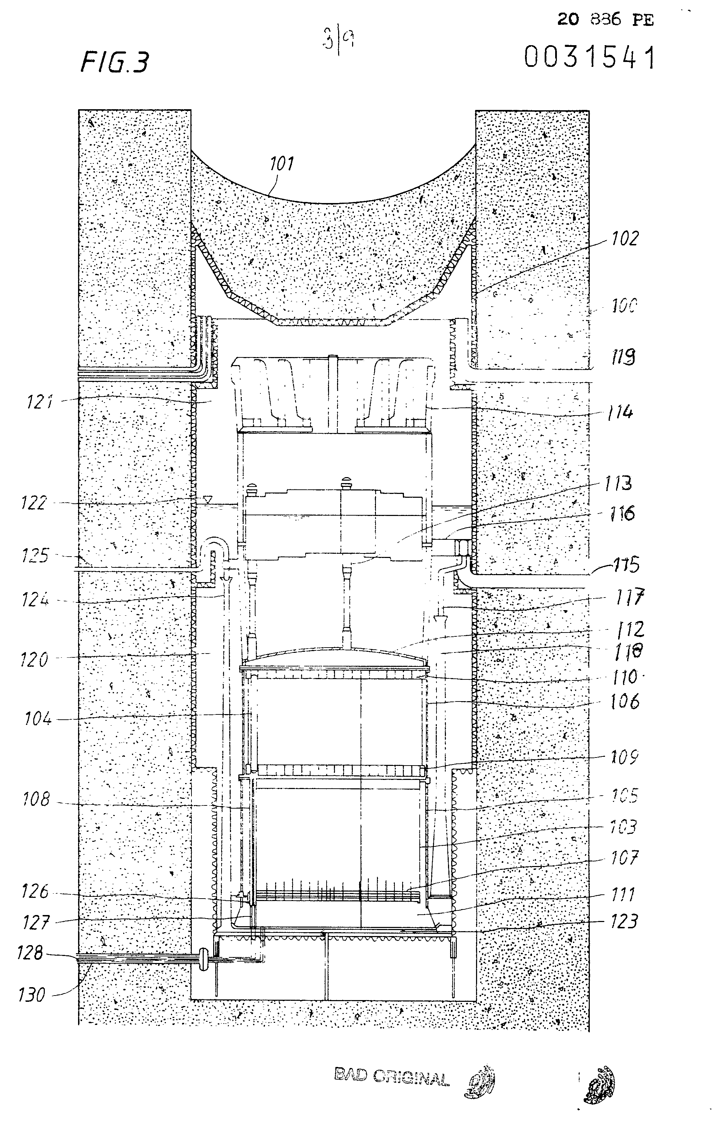

Der in Figur 3 gezeigte Reaktor enthält einen Betondruckbehälter 100 mit einem Deckel 101. Der Druckbehälter
ist auf der Innenseite mit einer nassen Isolierung 102 versehen. Der Reaktorkern 103 und die Steuerrohreinheiten 104 für Steuerstäbe sind in den Behältern 105 und 106 im unteren Teil des Druckbehälters 100 untergebracht. Im unteren Teil des Reaktorkerns befindet sich ein Kerngitter 107, das die Brennstoffmoduleinheiten 108 trägt. In dem oberen Behälter 106 befinden sich Steuergitter 109 und 110 für die Steuerrohreinheiten 104 für die Steuerstäbe. Unter dem Reaktorkern 103 befindet sich ein Verteilerkasten 111 für Reaktorkühlwasser. Über dem Behälter 106 befindet sich ein Deckel 112. An diesen sind mehrere Dampfseparatoren 113 angeschlossen. Über den Dampfseparatoren 113 befinden sich Feuchtigkeitsabscheider 114. Im Reaktor erzeugter Dampf wird über die Turbinenleitung 119 entnommen. Speisewasser wird dem Reaktor über die Speisewasserleitung 115 zugeführt. Die Speisewasserleitung 115 ist an einen Wasserverteilungsring 116 angeschlossen. Das Speisewasser wird auf eine Anzahl Düsen 117 in Ejektorpumpen 118 zur Zirkulation des Kühlwassers im Reaktor verteilt. Der untere Teil 120 des Druckbehälters 100 enthält Wasser und der obere Teil 121 Dampf. Der Wasserstand ist durch das Niveauzeichen 122 kenntlich gemacht. Unter dem Verteilerkasten 111 für das Kühlwasser befindet sich ein Verteilerkasten 123 für Druckwasser zur Erzeugung eines Halteflusses, durch den die Steuerstäbe in einer hochgeschobenen Lage in den Steuerrohreinheiten 104 oberhalb des Reaktorkerns 103 gehalten werden. Eine Ejektorpumpe 124 sorgt dafür, daß der Druck im Verteilerkasten 123 größer als in dem umgebenden Raum 120 ist. Der Ejektorpumpe 124 wird Antriebswasser über die Leitung 125 zugeführt. Die Verwendung einer Ejektorpumpe im Reaktorbehälter beseitigt die Gefahr eines Trockensiedens des Reaktorkerns 103 bei einem Leitungsbruch außerhalb des Reaktorbehälters 100. Steuerrohre 126 für Steuerstäbe in den Brennstoffmoduleinheiten 108 sind an Rohre 127 angeschlossen. Diese verlaufen durch den Verteilerkasten 111 und schließen die Steuerrohre 126 an den Verteilerkasten 123 an. Durch die Rohre 127 verlaufen Betä-

/11

tigungsleitungen 128 für das Ein- und Ausfahren der Steuerstäbe. Diese werden in Durchführungskanälen 130 durch die Wand des Reaktorbehälters 100 hindurchgeführt.

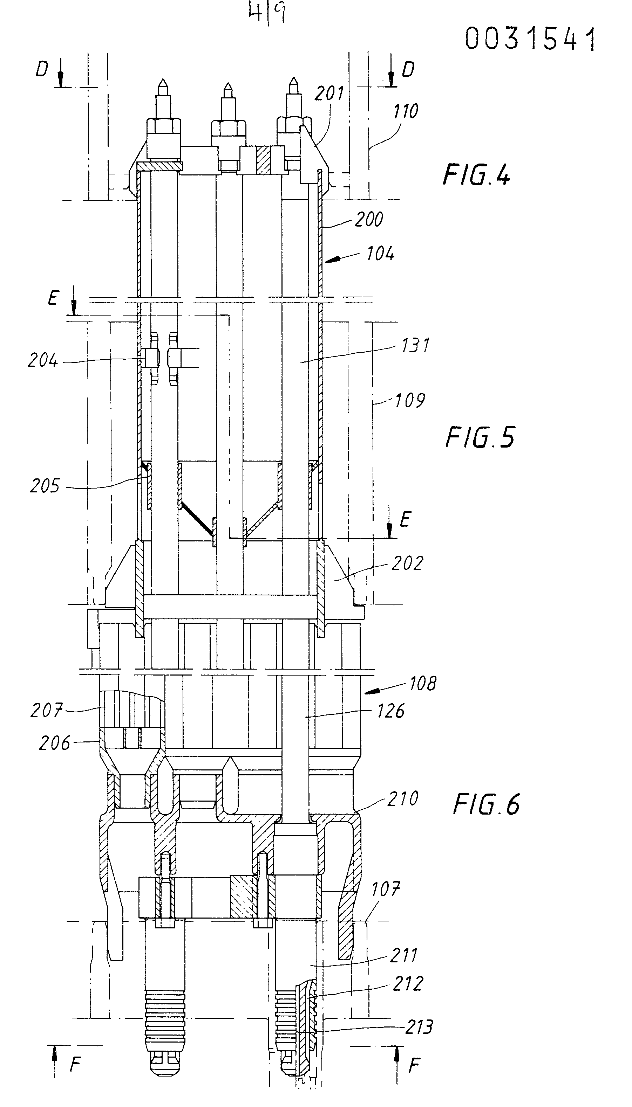

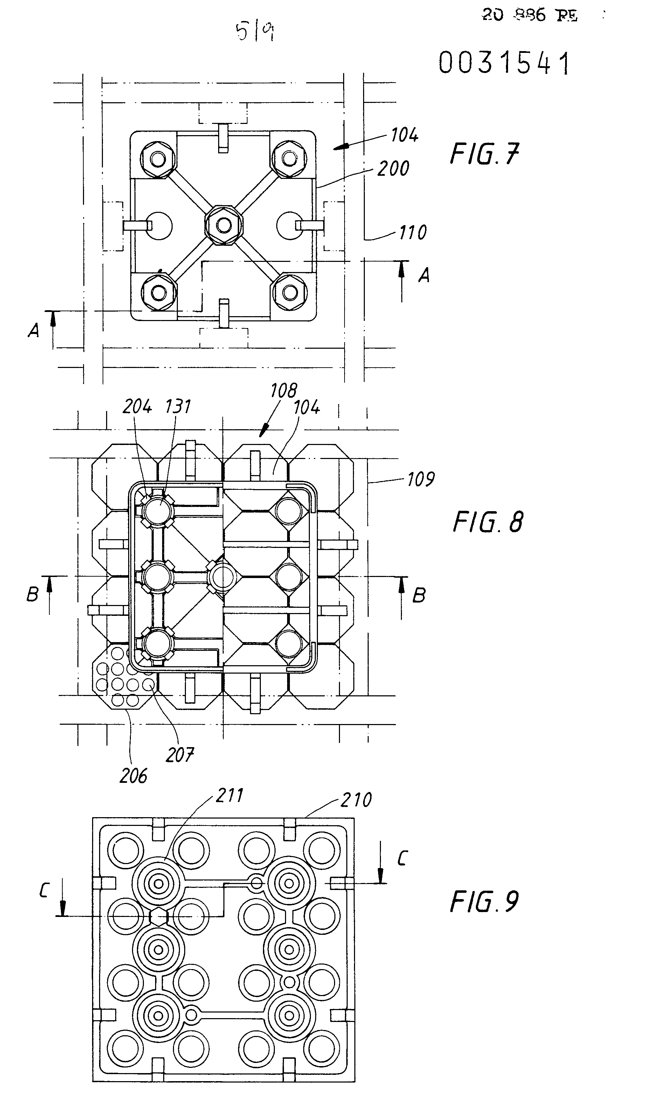

Die Figuren 4 und 7 zeigen den oberen Teil einer Steuerrohreinheit 104 im Behälter 106 über dem Reaktorkern 103. Der Schnitt in Figur 4 entspricht der Schnittlinie A - A in Figur 7. Die Ansicht gemäß Figur 7 liegt so, wie es die Pfeile D in Figur 4 andeuten. Die Figuren 5 und 8 zeigen den unteren Teil der Steuerrohreinheit 104 und den oberen Teil einer Brennstoffmoduleinheit 108. Der Schnitt in Figur 5 entspricht der Schnittlinie B - B in Figur 8. Der Schnitt in Figur 8 entspricht der Schnittlinie E - E in Figur 5.

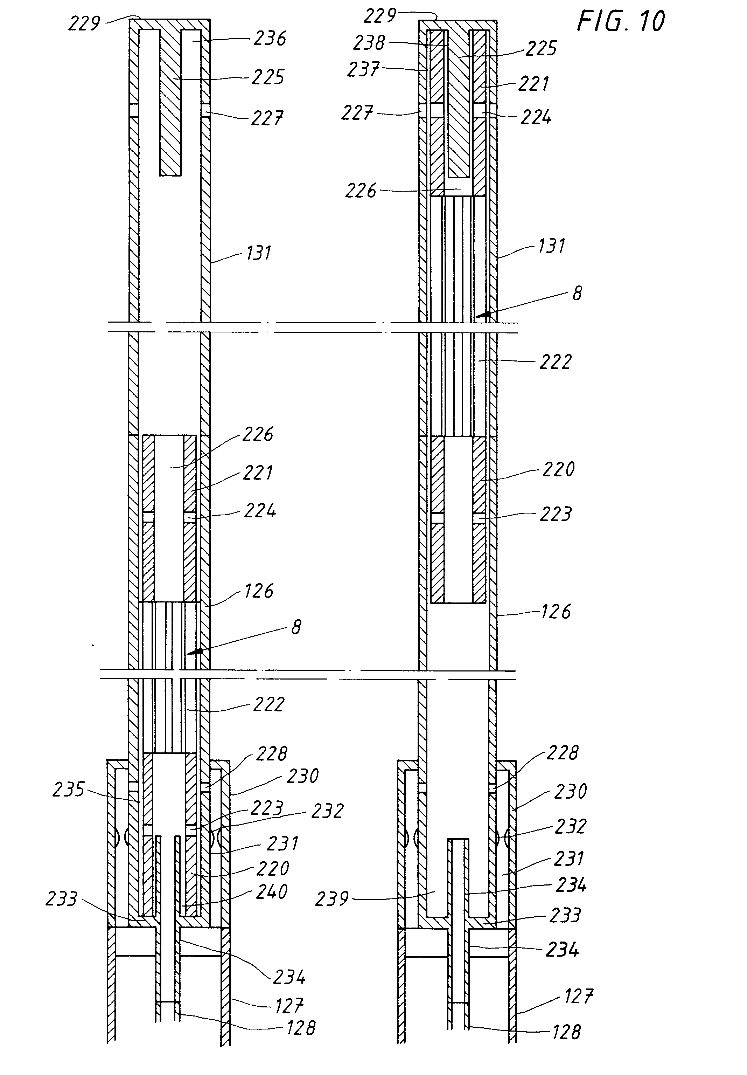

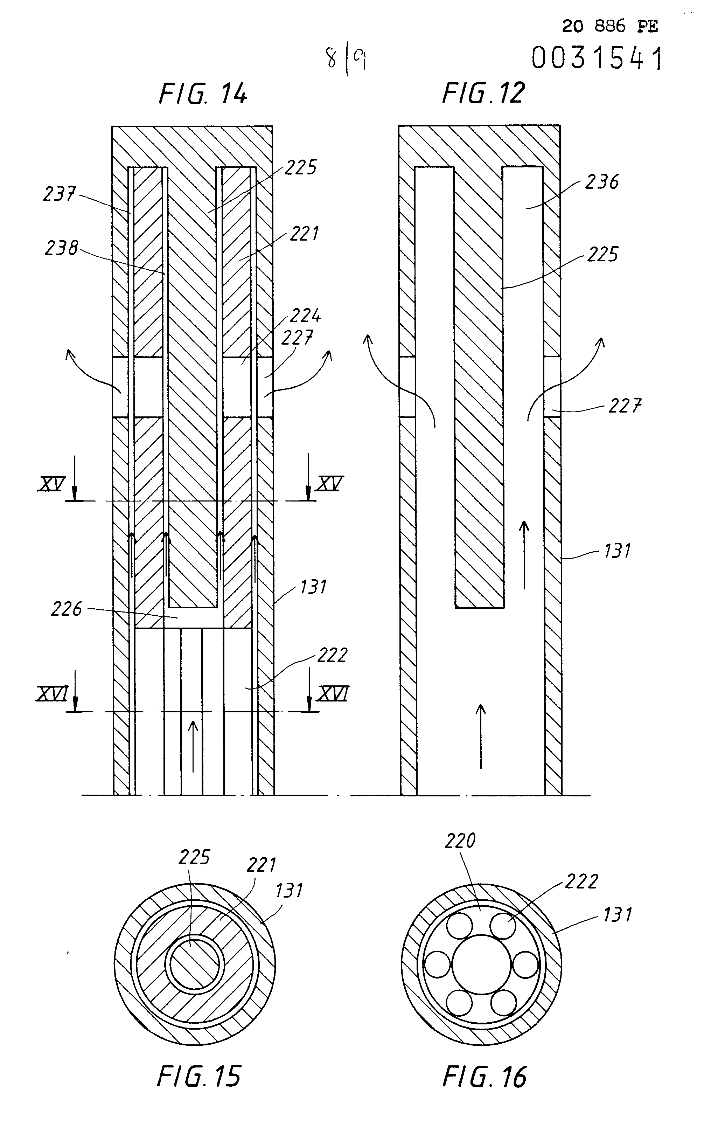

Die Figuren 6 und 9 zeigen einen Schnitt durch eine bzw. die Ansicht einer Brennstoffmoduleinheit 108. Der Schnitt in Figur 6 folgt der Linie C - C in Figur 9. Die Ansicht in Figur 9 erfolgt in Richtung der Pfeile F in Figur 6. Das Steuergitter 110 für die Steuerrohreinheiten 104 ist durch strichpunktierte Linien angedeutet. Wie aus den Figuren hervorgeht, enthalten die Steuerrohreinheiten 104 ein quadratisches Rohr 200 mit einem Oberteil 201, dessen Lage vom oberen Steuergitter 109 bestimmt wird. Ferner enthalten die Steuerrohreinheiten 104 ein Bodenteil 202, mit welchem sie in dem unteren Steuergitter 109 fixiert werden. Im Rohr 200 sind mehrere Steuerrohre 131 angeordnet. Sie sind am Oberteil 201 und am Bodenteil 202 sowie mittels Abstandshaltern 204 und 205 in mehreren verschiedenen Höhen dazwischen im Rohr 200 fixiert. Eine Brennstoffmoduleinheit enthält eine Anzahl Brennelementbündel 206 mit einem Bündel Brennstäbe 207 und einer Anzahl Steuerrohre 126 für die Steuerstäbe des Reaktors. Am unteren Teil der Brennstoffmoduleinheit 108 befindet sich ein Bodenteil 210, an welches die Brennelementbündel 206 und die Steuerrohre 126 angeschlossen sind. Die Brennstoffmoduleinheiten werden von dem Kerngitter 107 getragen.
Das Bodenteil 210 der Brennstoffmoduleinheiten 108 ist
mit Anschlußvorrichtungen 211 zum Anschluß der Steuerrohre 126 an den Verteilerkasten 123 und an die Betätigungsleitungen 128 versehen. Die Anschlußvorrichtungen
enthalten einen ersten Kanal 212 für einen Fluß von der
Verteilerkammer 123 zum Halten eines Steuerstabes in
hochgeschobener Lage und einen zweiten Kanal 213 für einen Fluß zur Bewegung des Steuerstabes zwischen seinen
beiden möglichen Lagen. Wie bereits erwähnt, ist die Anzahl der Steuerstäbe groß. Um einen unbeabsichtigten
schnellen Leistungsanstieg durch ein gleichzeitiges Herausschieben der Steuerstäbe aus dem Reaktorkern 103 zu
verhindern, kann jeder Steuerstabkanal mit einer Betätigungsvorrichtung für einen Betätigungsfluß von einer
Druckmittelquelle über seine jeweilige Betätigungsleitung 128 in Verbindung stehen, und die Betätigungsvorrichtung kann wie ein Koordinatenwähler aufgebaut sein,
der nur die Betätigung eines einzigen Steuerstabes oder
einer sehr geringen Anzahl von Steuerstäben gleichzeitig
zuläßt. Die Betätigung der Steuerstäbe 8 zwischen ihren
beiden möglichen Lagen und das Halten der Steuerstäbe in
ihrer oberen Lage wird näher anhand der Figuren 10 bis 16
beschrieben. Figur 10 zeigt vereinfacht schematisch ein
Steuerrohr für einen Steuerstab 8. In dem linken Steuerrohr 131, 126 der Figur befindet sich ein Steuerstab 8
in seiner unteren Lage und somit im Reaktorkern. In dem
rechten Steuerrohr 131, 126 der Figur befindet sich ein
Steuerstab 8 in seiner oberen Lage und somit über dem
Reaktorkern im Behälter 106 (Fig. 3). Der Steuerstab besteht aus drei Teilen, einem rohrförmigen unteren Endteil 220, einem rohrförmigen oberen Endteil 221 und zwischen den Endteilen ringförmig angeordneten Stäben 222,
die aus verschweißten rostfreien Rohren bestehen, die mit neutronenabsorbierendem Material, wie z.B. Borkarbid, $B_4C$, gefüllt sind. Die Endteile 220, 221 und die Borkarbidstäbe 222 sind zu einer Einheit miteinander verbunden. Die Figuren 15 und 16 zeigen einen Schnitt durch ein Endteil und einen Schnitt durch den Abschnitt mit Borkarbidstäben. Das Endteil 220 ist mit radialen Öffnungen 223 und das Endteil 221 mit radialen Öffnungen 224 (Fig. 10) versehen. Das Steuerrohr 131 ist an seinem oberen Ende mit einem hineinragenden Zapfen 225, dessen Durchmesser der Bohrung 226 derart angepaßt ist, daß ein relativ geringes Spiel vorhanden ist, und mit radialen Öffnung 227 versehen. Der Zapfen 225 ist an einem Deckel 229 befestigt, der das Rohr 131 verschließt. Das Steuerrohr 126 ist an seinem unteren Teil mit Öffnungen 228 versehen und von einer Rohrhülse 230 umgeben, die an ihrem oberen Ende an das Steuerrohr 126 angeschlossen ist. Zwischen dem Steuerrohr 126 und der Hülse 230 ist ein Spalt 231 vorhanden, der in seinem axialen Verlauf mit einer flußbegrenzenden Drosselstelle 232 versehen ist. Das Steuerrohr 126 hat einen Boden 233, durch den ein mit dem Boden befestigtes Rohr 234 verläuft, welches eine Strecke in das Rohr 126 hineinragt. Die Hülse 230 ist an ein Rohr 127 angeschlossen, das mit dem Verteilerkasten 123 für den Haltewasserfluß in Verbindung steht. Das Rohr 234 ist an eine im Rohr 127 verlaufende Betätigungsleitung 128 angeschlossen und steht über diese Betätigungsleitung mit einem Ventil in Verbindung, über welches zur Betätigung des Steuerstabes 8 Druckwasser zugeführt oder Wasser abgeführt werden kann. An das Steuerrohr kann ein Druckmeßgerät angeschlossen werden, das die Lage des Steuerstabes 8 anzeigt.

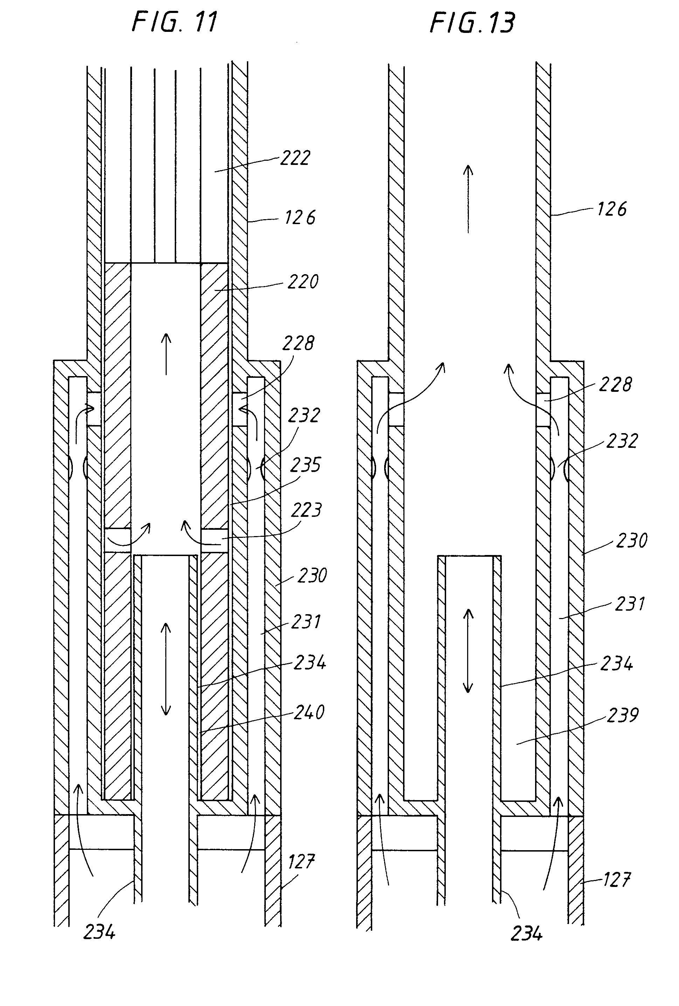

Es wird angenommen, daß sich der Steuerstab in seiner unteren Lage befindet, wie es die linke Seite in Fig. 10 zeigt. Die Pumpe 10 ist in Betrieb, und der Druck im Verteilerkasten 123 ist höher als in dem umgebenden Wasser im Reaktorraum 120. Von dem Verteilerkasten 123 strömt Wasser durch das Rohr 127 und den Spalt 231 zur Öffnung 228 und durch diese in den Spalt 235 zwischen dem Rohr 126 und dem unteren Endteil 220 und in beide Richtungen, so wie es die Pfeile in Figur 11 zeigen. Das nach unten strömende Wasser strömt durch die Öffnung 223 und danach durch die Steuerrohre 126 und 131 nach oben und durch die Öffnungen 227 hinaus. Der Spalt 235 ist klein, so daß der Strömungswiderstand im Spalt 235 den Fluß auf einen unbedeutenden Wert begrenzt. Es tritt keine nennenswerte Hubkraft auf, welche den Steuerstab hochzuheben versucht. Zum Anheben des Steuerstabes 8 in seine obere, im rechten Teil der Figur 10 gezeigte Lage wird Betätigungswasser von einer Druckmittelquelle mit hohem Druck über die Leitung 128 und das Rohr 234 zugeführt. Der Fluß wird so groß, daß zwischen den beiden Enden des Steuerstabes 8 ein so großer Druckabfall auftritt, daß die Hubkraft das Gewicht des Stabes übersteigt. Der Stab 8 wird dadurch in seine obere Lage gemäß der rechten Seite in Figur 10 gehoben. Die Drosselung 232 begrenzt den Verlust an Betätigungswasser zum Druckkasten, wenn das untere Endteil 220 bei seiner Bewegung nach oben an den Öffnungen 228 vorbeigelaufen ist. Wenn sich der Steuerstab 8 seiner oberen Endlage nähert, taucht der Zapfen 225 in die Bohrung 226 im oberen Endstück 221 ein. Das in dem ringförmigen Raum 236 vorhandene Wasser bremst den Steuerstab 8, wenn es durch die Spalte 237 und 238 herausgepreßt wird. Wenn der Steuerstab seine obere Lage erreicht hat, wird die Zufuhr von Betätigungswasser unterbrochen. Durch den Überdruck im Verteilerkasten 123 strömt Wasser kontinuierlich in die Steuerrohre 126 und 131, an dem Steuerstab 8 entlang, durch die Spalte 237 und 238 und durch die Öffnungen 227 hinaus. In den Spalten 237 und 238 entsteht ein Druckabfall, der nahezu die Größe des Überdrucks im Verteilerkasten 123 hat. Hierdurch entsteht eine Kraft, die bestrebt ist, den Steuerstab in seiner oberen Lage zu halten.

Nunmehr wird angenommen, daß sich der Steuerstab 8 in der oberen rechts in Figur 10 gezeigten Lage befindet und vom Haltewasserfluß in dieser Lage gehalten wird. Ein Senken des Stabes 8 aus seiner oberen in seine untere Endlage geschieht wie folgt: Ein Ventil in der Betätigungsleitung 128 wird geöffnet und Druckmittel strömt aus dem Steuerrohr 126 durch das Rohr 234 an seinem Boden und durch die Betätigungsleitung 128 hinaus. Die Drosselstelle 232 ist so bemessen, daß bei normalem Haltefluß vom Verteilerkasten 123 der an der Drosselstelle 232 auftretende Druckabfall nur gering ist, dagegen groß ist, wenn das genannte Ventil geöffnet wird und Wasser durch die Betätigungsleitung 128 herausströmt. Dies hat dann eine erhebliche Drucksenkung in den Steuerrohren 126 und 131 zur Folge, so daß die Haltekraft, die den Steuerstab 8 in seiner oberen Lage hält, zusammenbricht und der Steuerstab durch sein eigenes Gewicht herunterfällt. Wenn das untere Endteil 220 des Steuerstabes den ringförmigen Raum 239 erreicht, wird der Steuerstab dadurch gebremst, daß das in dem ringförmigen Raum 239 vorhandene Wasser durch die Spalte 235 und 240 herausgedrückt werden muß. Wenn das hülsenförmige obere Endteil 221 des Steuerstabes den ringförmigen Raum 236 verlassen hat  und der Steuerstab trotz des vom Überdruck im Verteilerkasten 123 verursachten begrenzten Wasserflusses durch sein eigenes Gewicht in seine untere Lage fällt, so wird das genannte Ventil geschlossen. Die Betätigungsleitung kann auch zur Anzeige der Lage des Steuerstabes 8 benutzt werden. Diese Anzeige kann man dadurch erhalten, daß der Druck in der Betätigungsleitung 128 gemessen wird. Wenn sich der Steuerstab 8 in der unteren Lage befindet, ist der Druck nahezu gleich dem Reaktordruck. Wenn sich der Steuerstab 8 in seiner oberen Lage befindet, ist der Druck nahezu gleich dem Druck im Verteilerkasten 123.

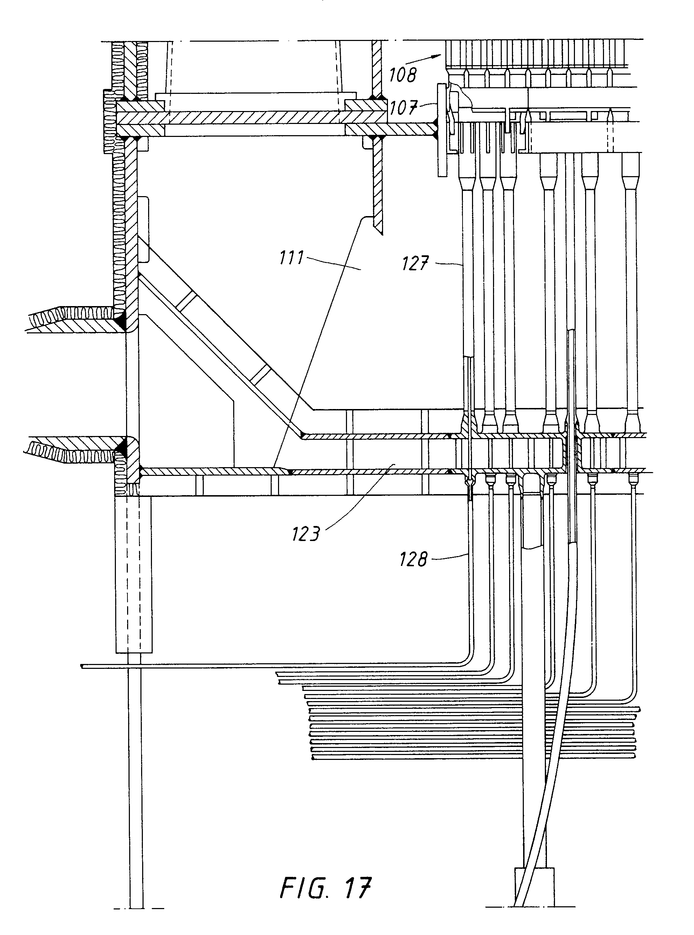

Figur 17 zeigt detaillierter den Reaktorteil, der unmittelbar unter dem Reaktorkern 103 liegt. Eine Anzahl von

9.12.1980
20 886 PE

0031541

Brennstoffmoduleinheiten 108 ruht auf dem Kerngitter. Unter dem Kerngitter 107 befindet sich ein Verteilerkasten 111 für Reaktorkühlwasser sowie ein Verteilerkasten 123 für Wasser zum Halten der Steuerstäbe 8 in hochgeschobener Lage. Durch den Verteilerkasten 111 verlaufen mehrere Rohre 127, die die Steuerrohre 126 mit dem Verteilerkasten 123 verbinden. Im Rohr 127 läuft die Betätigungsleitung 128, die den Verteilerkasten 123 durchläuft und durch den Reaktorbehälter 100 zu einem Ventilsystem läuft, über welches die Steuerstäbe 8 betätigt werden.

Patentanwalt und Rechtsanwalt
Dr.-Ing. Dipl.-Ing. Joachim B o e c k e r

6 Frankfurt / Main 1
Rathenauplatz 2 - 8
Telefon: (06 11) * 28 23 55
Telex: 4 189 066 itax d

**0031541**

, 9.12.1980
20 886 PE

- 17 -

Patentansprüche:

1. Kernreaktor des Siedewassertyps mit einem in einem Druckbehälter (1, 100) eingeschlossenen Reaktorkern (2, 103), mit durch den Kern (2, 103) verlaufenden Steuerstabkanälen (6, 126, 131), deren Länge ungefähr das Zweifache der Höhe des Reaktorkerns (2, 103) beträgt, und mit in diesen Steuerstabkanälen (6, 126, 131) frei beweglichen Steuerstäben (8), die zwischen einer unteren Lage im Reaktorkern (2, 103) und einer oberen Lage über dem Reaktorkern (3, 103) hydraulisch verschoben werden können und die durch eine Druckdifferenz zwischen den Steuerstabkanälen (6, 126, 131) und dem umgebenden Reaktorraum (4, 120) in der oberen Lage gehalten werden, dadurch gekennzeichnet, daß die Steuerstabkanäle (6, 126, 131) an ihrem oberen Teil mit dem umgebenden Reaktorraum (4, 120) und an ihrem unteren Teil mit der Druckseite eines Pumpenkreises in direkter Verbindung stehen, daß die Pumpe (10) des Pumpenkreises an ihrer Saugseite an den mit Wasser gefüllten Raum (4) des Reaktors angeschlossen ist und daß die Steuerstabkanäle (6, 126, 131) über Betätigungsleitungen (128) an eine Betätigungseinheit angeschlossen sind, durch welche Druckmittel zur Betätigung der Steuerstäbe (8) den Steuerstabkanälen (6, 126, 131) zugeführt oder aus diesen abgelassen werden kann.

2. Kernreaktor nach Anspruch 1, dadurch gekennzeichnet, daß der Pumpenkreis eine Ejektorpumpe (124) enthält, die im Reaktordruckbehälter (1, 100) angeordnet ist.

/18

3. Kernreaktor nach Anspruch 1 oder 2, dadurch gekennzeichnet, daß ein Sicherheitsventil (51) an die Saugleitung (11) des Pumpenkreises angeschlossen ist.

4. Kernreaktor nach einem der vorhergehenden Ansprüche, dadurch gekennzeichnet, daß ein Kurzschlußkreis (14, 15) mit einem Ventil (16) die Druckleitung (12) der Druckhaltepumpe (10) mit ihrer Saugleitung (15) verbindet.

5. Kernreaktor nach Anspruch 4, dadurch gekennzeichnet, daß das Ventil (13) im Kurzschlußkreis (14, 15) über eine Bedienungsleitung (16, 18) mit der Druckleitung (12) der Druckhaltepumpe (10) in Verbindung steht und in schließender Richtung vom Druckmittel des Pumpenkreises beaufschlagt wird und daß das Ventil (13) mit mindestens einem Ventil (25, 26, 47) zum Ablassen von Druckmittel aus der Bedienungsleitung (18) des Ventils (13) in Verbindung steht.

6. Kernreaktor nach Anspruch 5, dadurch gekennzeichnet, daß der Reaktor Hilfsmittel (27, 28, 30) enthält, die bei Druckveränderungen im Reaktorbehälter (1, 100) die Öffnung eines Ventils (25) veranlassen, über welches Druckmittel aus der Bedienungsleitung (18) für das Ventil (13) des Kurzschlußkreises (14, 15) abfließen kann.

7. Kernreaktor nach einem der vorhergehenden Ansprüche, dadurch gekennzeichnet, daß die Endteile (220, 221) der Steuerstäbe (8) und der Steuerstabkanäle (6, 126, 131) derart ausgebildet sind, daß die Endteile (220, 221) der Steuerstäbe (8) im wesentlichen die Öffnungen (227, 228) verschließen, durch welche die Steuerstabkanäle (6, 126, 131) mit dem umgebenden Reaktorraum (4, 120) bzw. mit der Druckseite des Pumpenkreises in Verbindung stehen.

9.12.1980
20 886 PE

0031541

8. Kernreaktor nach einem der vorhergehenden Ansprüche, dadurch gekennzeichnet, daß die Betätigungsleitung (128) zur Lageänderung der Steuerstäbe (8) an Druckmeßgeräte angeschlossen werden kann, die den Druck in den Steuerstabkanälen (6, 126, 131) und somit die Lage der Steuerstäbe (8) anzeigen.

FIG. 1a

20 886 PE

0031541

FIG. 1b

FIG. 2

FIG.3

20 886 PE

0031541

FIG.4

FIG.5

FIG.6

20 886 PE

0031541

FIG.7

FIG.8

FIG.9

20 836 PE
0031541

FIG. 10

20 886 PE
0031541

# FIG. 11

# FIG.13

FIG. 14

FIG. 12

FIG. 15

FIG. 16

FIG. 17